Europäisches Patentamt

European Patent Office

Office européen des brevets

(11) Publication number: **0 145 724**
**B1**

# EUROPEAN PATENT SPECIFICATION

(45) Date of publication of patent specification: **25.05.88**

(51) Int. Cl.⁴: **F 16 H 3/66**

(21) Application number: **84901384.2**

(22) Date of filing: **26.03.84**

(86) International application number:
**PCT/GB84/00100**

(87) International publication number:
**WO 84/03749 27.09.84 Gazette 84/23**

(54) **EPICYCLIC GEAR TRANSMISSIONS.**

(30) Priority: **25.03.83 GB 8308214**

(43) Date of publication of application:
**26.06.85 Bulletin 85/26**

(45) Publication of the grant of the patent:
**25.05.88 Bulletin 88/21**

(84) Designated Contracting States:
**DE FR GB SE**

(56) References cited:
**EP-A-0 014 122**
**WO-A-81/03052**
**DE-A-2 504 867**
**US-A-3 736 815**
**US-A-4 351 409**

(73) Proprietor: **A.B. Volvo**
**P.O. Box 382**
**S-405 09 Goteborg (SE)**

(72) Inventor: **MILLER, Albert, Arthur**
**Caddon Lodge 4 Whytbank Row**
**Clovenfords Galashiels TD1 3NE (GB)**

(74) Representative: **Hellbom, Lars Olof et al**
**H. Albihns Patentbyra AB Box 7664**
**S-103 94 Stockholm (SE)**

Courier Press, Leamington Spa, England.

## Description

This invention relates to multi-ratio epicyclic transmissions of the kind having input and output members, a plurality of epicyclic gear trains each having a sun gear wheel, an internally toothed ring gear and a set of planet pinions rotatably mounted in a planet carrier.

In a vehicle power installation consisting of a prime-mover connected to drive the vehicle through a planetary change-speed gearbox it is sometimes desirable to provide a supplementary rotary drive member to which an auxiliary dynamic machine may be drivingly connected to drive the vehicle through the change-speed gearbox either independently of, or in combination with, the prime-mover and/or the dynamic machine may be used to take up power from the vehicle or its prime-mover through the same rotary member.

US—A—4,351,409 discloses a transmission comprising a normal input drive element, a supplementary drive element, an output member and main planetary change-speed gearing for driving the output member from either input element independently of the other.

In this known arrangement, the engine is connected to the normal input of the transmission by a chain-and-sprocket drive and a supplementary member is connected to the normal input member by a clutch.

In some installations however it is not practicable to connect the supplementary drive member through a train of gears driven directly from the normal input member of the change-speed gearbox — especially when a hydrodynamic torque converter is installed between the prime-mover and the gearbox. In such installations it would be preferable if the alternative input rotary member could be located in the region of the gearbox which is remote from the normal input member, but unfortunately in most planetary gearboxes the input member is not directly accessible for connection in that region.

According to the present invention, a transmission is characterised by supplementary planetary gearing interconnecting the supplementary drive element and two elements of the main change speed gearing other than the normal input drive element, the proportioning of the supplementary planetary gearing being such that the means for engaging the range of various drive ratios in the normal change speed gearing also provides a corresponding range of ratios between the supplementary drive element and the output member.

With this arrangement a range of ratios can be established between the supplementary drive member and the output member, which range can correspond in number of ratios, provided by the several gear trains, between the normal input member and the output member. For constructional reasons, the values of the individual ratios in the two ranges may differ somewhat, as will be explained below.

The invention is particularly applicable to vehicle transmissions used in conjunction with regenerative braking systems in which case, for slowing the vehicle, energy is transferred from the supplementary input member to a device such as a pump or electrical generator which transforms the energy into a form which can be stored for example in a pressure accumulator or electrical storage battery. For restarting or accelerating the vehicle, or assisting therein, energy can be returned from the accumulator or battery through the supplementary input member. The range of ratios between the supplementary input member and the output member in the arrangement according to the invention provides a more constant rate of transfer of the energy in each direction over a range of vehicle speeds.

Preferably the supplementary input member is connected to the first element of the supplementary gear train by a clutch, conveniently a fluid-pressure operated friction clutch, co-axial with the transmission.

Embodiments of the invention will now be described by way of example with reference to the accompanying drawings, in which:—

Figures 1a and 1b taken together show the upper half of a vertical axial sectional view through a transmission for providing four forward gear ratios and reverse, for example, for an urban bus; and

Figures 2 to 7 show further transmissions diagrammatically.

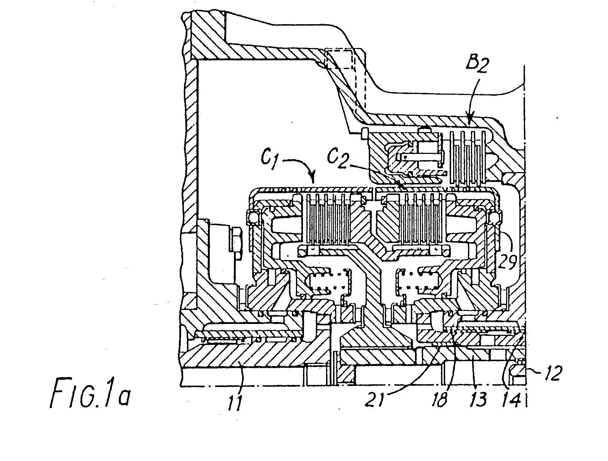

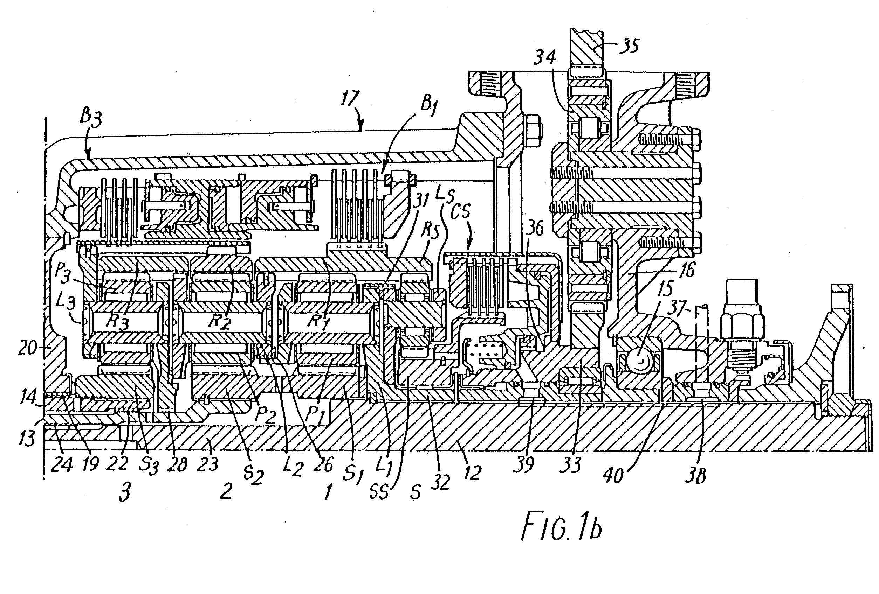

The transmission shown in Figures 1a and 1b establishes a driving connection between the turbine shaft 11 of a torque converter driven by an engine (both not shown) and a transmission output shaft 12.

First and second fluid pressure operated clutches $C_1$ and $C_2$ (Fig. 1a) can be selectively engaged to transmit the drive from the shaft 11 to either of two concentric input drive sleeves 13 and 14 for epicyclic gearing comprising three epicyclic gear trains 1, 2, 3 (Fig. 1b). Each gear train comprises a sun-wheel S, a ring gear R and a set of planet pinions P each meshing with the respective sun gear and ring gear and rotatably mounted in a planet carrier L. The planet carrier $L_1$ of the first gear train 1 is secured to the output shaft 12 and effectively forms part of it, the combination being rotatably supported by a ball bearing 15 mounted in an end cover 16 of a casing 17 for the transmission.

The outer input sleeve 14 for the gearing is journalled at two spaced locations 18 (Fig. 1a) and 19 (Fig. 1b) in a supporting wall portion 20 of the stationary casing 17. At its output (right-hand) end, the outer sleeve 14 carries the sun-wheel $S_3$.

The inner input sleeve member 13 is journalled in the outer sleeve member 14 at two spaced locations 21 and 22 and at its output end carries and has secured to it the sun-wheel $S_2$ which is integral with the sun-wheel $S_1$ which surrounds the output shaft 12 with a small clearance.

The output shaft 12 has a forward extension 23 of reduced diameter which extends into the inner sleeve member 13 and is supported in the latter by a needle roller bearing 24 lying substantially in the plane of the supporting portion 20 of the casing.

The planet carrier $L_1$ has a forward extension sleeve 26 forming a bearing journal for the planet carrier $L_2$ of the second gear train which also carries the ring gear $R_1$ and, supported on the latter, alternate brake plates of a fluid pressure operated brake $B_1$ for holding the ring gear $R_1$ to establish the lowest gear ratio. The ring gear $R_2$ is connected to a similar but smaller brake $B_3$ and to the planet carrier $L_3$.

The planet carrier $L_3$ is rotatably supported by a journal bearing 28 on the inner sleeve member 13.

The sun-wheel $S_3$ can be held stationary by means of a brake $B_2$ which acts on the output element 29 of the clutch $C_2$ and thus on the outer sleeve 14.

The ring gear $R_3$ is rotationally connected to the planet carrier $L_2$.

By way of example, each sun wheel $S_1$ $S_2$ and $S_3$ has 40 teeth and each ring gear $R_1$ $R_2$ and $R_3$ has 84 teeth and by engaging the various brakes and clutches, the following forward speeds and ratios are obtainable:—

| Speed | Elements Engaged | Ratio |
|-------|------------------|-------|
| 1st | C1, B1 | 3.1:1 |
| 2nd | C1, B3 | 1.85:1 |
| 3rd | C1, B2 | 1.38:1 |
| 4th | C1, C2 | 1:1 |

accordance with the present invention, the transmission includes a supplementary epicyclic gear set S situated adjacent the output (right hand) end of the train 1.

It will be observed that in this location at the 'output' end of the gearbox two elements of the 1st-speed planetary train 1, namely its ring gear $R_1$ and its planet carrier $L_1$, are accessible for linking to the supplementary planetary train and in this case their respective planet carriers $L_1$ & Ls are linked by a short toothed ring 31 while the 84-tooth ring gear $R_1$ is extended to form an 84-tooth ring gear RS for the supplementary train.

If the supplementary sun pinion SS had been chosen to have 40 teeth as for $S_1$ of the 1st-speed train, then the sun gear SS would have reproduced precisely the rotary motion of $S_1$ and of the normal input member 13 of the gearbox, following the same speed ratios relative to the output shaft 12 as does the input member 13 in accordance with whichever ratio is engaged in the gearbox at any time.

It will be observed, however, that the dimensions of the oiutput shaft 12 and the boss sleeve 32 of the carrier $L_1$ mounted thereon do not permit the pitch circle diameter of the sun pinion SS to be as small as the sun pinion $S_1$, but the same result could have been obtained by increasing the pitch-circle diameter of the ring gear RS so as to maintain ratio RS/SS equal to $R_1/S_1$. For example RS could have 105 teeth and SS 50 teeth. However, in the particular role of providing an alternative input member for the auxiliary machine for retarding and/or accelerating the vehicle as stated above, the supplementary planetary train shown in Figure 1b is not only acceptable but preferable.

Thus with SS having 48 teeth and RS having 84 teeth, the alternative input member SS will provide forward drive ratios through the planetary gearbox which are slightly modified from those provided between the normal input member 13 and the output shaft 12. These modified ratios will be as follows:—

1st speed ($B_1$ engaged)  = 2.75:1
2nd speed ($B_3$ engaged)  = 1.71:1
3rd speed ($B_2$ engaged)  = 1.31:1
4th speed ($C_1$ and C≥)  = 1.0:1

Fig. 1b shows a train of transfer gears consisting of a first pinion 33 having 58 teeth, an idler pinion 34 having 46 teeth and a final take-off gear 35 having 42 teeth for direct connection with the shaft of the auxiliary dynamic machine, the first pinion 33 being coaxial with supplementary sun pinion SS.

A fluid-pressure-operated supplementary clutch CS of multi-plate construction surrounds the output shaft 12 and, when engaged interconnects the first pinion 33 with the supplementary sun pinion SS. To engage the clutch CS, oil under pressure is supplied to its working chamber 36 from an external pipe 37 through annular galleries 38 and 39 surrounding the output member 12 and communicating with opposite ends of longitudinal grooves 40 in the latter.

The auxiliary dynamic machine (not shown) preferably takes the form of a variable-displacement hydrostatic machine which can be controlled to act as an hydraulic pump when it is required to retard the vehicle and as an hydraulic motor when it is required to accelerate or to assist in accelerating the vehicle.

Alternatively, the auxiliary machine could be a dynamo-electric machine adapted to act as a generator or as a motor respectively, or alternatively it could be an air compressor/air motor. It might even be an auxiliary prime mover or a retarder of any kind.

In operation, when the driver operates the braking or retarding regulator of the vehicle when he wishes to retard or to stop the vehicle, this regulator first engages the clutch CS and then progressively increases the specific displacement of the hydro-static pump in accordance with the rate of retardation required, the hydrostatic fluid being pumped into a pressurised accumulator for storage.

As the vehicle speed diminishes the gearbox may be down-shifted by an automatic ratio selector (or manually) if it is desired to increase the effectiveness of the hydrostatic pump as a retarder. Alternatively the particular gear ratio being used when the retarding operation started may be deliberately retained while the vehicle comes to rest, this being made possible without stalling the engine when a hydrodynamic torque converter or coupling is incorporated in the driveline. Alternatively retention of this ratio could end with the release of the retarding control, whether or not the vehicle has stopped.

Assuming that the engine is kept running while the vehicle is at rest, when the vehicle has to be set in motion the engine will be running at idling speed, thus providing oil pressure from an engine-driven pump for control of the clutches and brakes contained in the gearbox. If the hydraulic accumulators are adequately charged with stored hydrostatic energy the driver's power regulator, which normally increases the engine power to accelerate the vehicle, will be adapted in this case to disengage the clutch $C_1$ (if previously engaged) and to engage brake $B_1$ (if not previously engaged) and to engage clutch CS and then to admit stored hydrostatic pressure to the hydraulic motor and progressively to increase the specific displacement (stroke) of the motor to produce driving torque in accordance with the displacement of the driver's power regulator.

Thus the motor will accelerate the vehicle through a 1st-speed reduction ratio of 2.75:1 between the supplementary sun wheel SS and the output shaft 12 until a predetermined speed is reached when the 2nd-speed ratio of 1.71:1 will become effective by engaging $B_3$ and disengaging $B_1$ and, at a still higher speed, 3rd-speed ratio of 1.31:1 will be made effective by engaging $B_2$ and disengaging $B_3$.

It is intended that, during at least the early part of the acceleration range provided by the hydraulic motor, the engine will remain at idling speed with clutch $C_1$ disengaged, since, in the first part of the range of 1st-speed acceleration, the hydrodynamic torque converter or coupling would have its lowest efficiency. At some advanced stage in the vehicle's acceleration (possibly in 2nd or 3rd-speed range) or whenever the stored hydrostatic energy is nearing exhaustion, provision will be made for the engine fuel injection to respond to the position of the driver's power regulator, for the engagement of clutch $C_1$, the reduction of the hydraulic motor displacement to zero, the isolation of its pressure ports from stored pressure and finally the disengagement of the clutch CS.

Apart from the driver's deliberate actions to regulate acceleration or retardation, it is preferable that all the other functions referred to above, including gearshifting, be performed automatically.

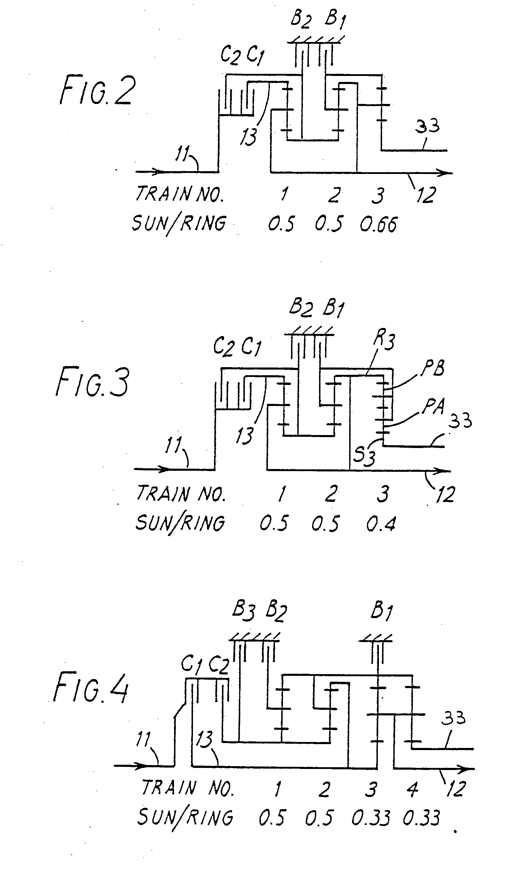

Figures 2 and 3 show the application of the invention to the well-known Simpson gearing which comprises first and second epicyclic gear trains 1 and 2 which have their elements connected to the output elements of clutches C1, C2,

brakes B1, B2 and the output shaft 12 in the manner shown in Figure 2. If the ratio of the numbers of teeth on the sun wheel to the numbers of teeth on the ring gear is 0.5 for both trains 1 and 2, shown in Fig. 2, then, with the clutch C1 engaged to connect the input member 11 of the transmission to the input member 13 of the gearing, three forward drive ratios of 2.5, 1.5 and 1.0 are obtainable.

In accordance with the invention, a supplementary epicyclic gear train 3 is added to the known gearing shown in Fig. 2 and has its ring gear connected to the planet carrier of the second gear set 2, its planet carrier connected to the ring gear of the second set (and to the output shaft 12) and its sun connected to the supplementary input member 14.

For the ratios of the speed of the output member 12 to those of the supplementary input member 14 to be the same as for the normal input member 11 of the transmission, it would be necessary for the ratio between the numbers of teeth on the sunwheel and ring gear of the supplementary gear train 3 to be as high as 0.66. This would result in the planet pinions having a diameter one-quarter of that of the sun wheel and thus being unacceptably small.

According, where identity of ratios is mandatory, the arrangement shown in Fig. 3 is suitable. In this case, the supplementary gear train 3 has a sun:ring ratio of 0.4 and has intermeshing planets PA and PB, the inner planet pinions PA each meshing with the sun wheel S3 and an outer planet pinion PB while the latter also meshes with the supplementary ring gear R3. In this modified arrangement, the planet carrier of the supplementary gear train is connected to the planet carrier of the second gear train (and to the brake B1) while the ring R3 is connected to the ring gear of the second gear train.

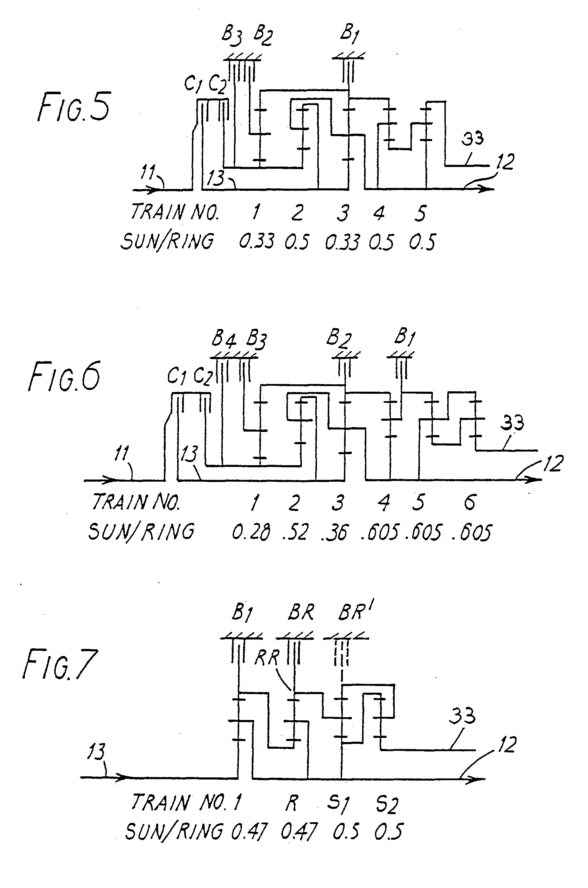

Fig. 4 shows another well known epicyclic change-speed transmission comprising three epicyclic gear trains 1, 2 and 3 which provides four forward drive ratios when the clutch C1 is engaged. With the sun:ring proportions indicated in Fig. 4, these ratios are 4.0, 1.82, 1.33 and 1.0. In accordance with the invention, a supplementary epicyclic gear train 4 has its ring gear and planet carrier connected respectively to the ring gear and planet carrier of the gear train 3 and its sun wheel is connected to the supplementary input member 14. If, as indicated in Fig. 4, the sun:ring ratio of the supplementary gear train 4 is the same as that of the gear train 3 (0.33), the ratios for the supplementary input member 14 will be the same as for the normal input member 11. However, the output shaft 12 has to pass through the sun wheel of the supplementary gear train 4 and thus in some installations, the necessary diameter of the output shaft 12 may preclude the use of a sun wheel in the supplementary gear train which is small enough to avoid the need for an unacceptably large ring gear for this supplementary gear train.

To overcome this problem, the alternative solution shown in Figure 5 may be used in which the supplementary planetary gearing comprises two epicyclic gear trains 4 and 5 of equal proportions to one another but having a larger sun:ring ratio of 0.5. The supplementary input member 14 is now connected to the ring gear of the train 5 while the planet carrier of the train 5 is connected to the sun wheel of the train 4, the sun wheel of the train 5 being connected to the output member 12. With this arrangement, the supplementary input member 14 will rotate at exactly the same speed as the gearing input member 13 and thus the normal transmission input member 11 (with the clutch C1 engaged) in any forward drive ratio.

In Fig. 5, the interconnections of the elements of the trains 1, 2 and 3 differ somewhat from those shown in Figure 4 and train 1 has a different sun:ring ratio. These modifications could of course be applied to the transmission shown in Figure 4.

Fig. 6 shows another known change-speed gearing for a transmission in which trains 1 to 3 correspond to the trains 1 to 3 of Figure 5 while the train 4 provides an extra low forward ratio when the brake B1 is applied. In accordance with the invention, supplementary epicyclic gearing comprises the trains 5 and 6 connecting the supplementary input member 14 to the planet carrier of the fourth train 4 and to the output shaft 12. Provided that the sun:ring proportions of each of the trains 3, 4, 5 and 6 are as indicated, the supplementary input member 14 will rotate at the same speed as the gearing input shaft 13 in any forward gear ratio. This would also apply if either one of the trains 5 and 6 were to have a different sun:ring proportion provided that the other train were proportioned to compensate. For example, train 5 could have a lower sun:ring proportion than 0.605 provided that train 6 were given a higher sun:ring proportion of suitable value. The same modification could also be applied to the sun:ring proportion of trains 4 and 5 in Figure 5. Thus, when the supplementary gearing comprises two individual planetary gear trains compound connected to each other, the two trains need not be of equal proportions but it is normally preferable that they have equal proportions to permit the use of as many parts of common design or profile to be used as possible.

It is perhaps worth pointing out that where the supplementary planetary gearing comprises two planetary gear trains compound-connected together as in the case of figure 5 or 6, there will be an independently rotatable member which could be provided with a brake to obtain an additional ratio. Thus, with the gearing shown in Figure 5 or 6, the link between the sun wheel of the first train of the supplementary gearing and the planet carrier of the second supplementary gear train could be held by an additional brake which, when engaged, would provide a very high reverse ratio between the members 13 and 12 (and also between the supplementary input member 14 and the output member 12). In the case of figure 5 this ratio would be −0.5:1 whereas in Figure 6 it would be −1.65:1.

Figure 7 shows an arrangement for applying the invention in conjunction with a known modification to the gearings shown in Figures 1b, 3, 4 and 5, only the primary gear train 3 of the forward drive gearing being shown. The modification consists in adding a reverse epicyclic gear train R at the output side of the primary gear train 3 and eliminating the reverse clutch ($C_2$ in Fig. 1a). The planet carrier $L_R$ of the reverse train R is secured to the output member $12_R$, while its sun wheel $S_R$ is secured to the ring gear $R_3$ of the primary train. A reverse brake BR can be energised to hold the ring gear $R_R$ to engage reverse drive between the input shaft 13 and the output shaft 12.

Figure 7 shows how supplementary planetary gearing comprising two supplementary trains S1 and S2 could be used to interconnect the supplementary input member 14 with the output shaft 12 and the reaction member RR of the reverse train R in order that the member 14 will rotate in unison with the input member 13 irrespective of which (if any) gear ratio is engaged. If a supplementary brake BR′ were provided it would afford an additional reverse drive ratio of approximately — 2.0:1 when BR′ is engaged (instead of BR).

In a modification of the transmission shown in Figures 1a and 1b, the clutch Cs may be omitted or transferred to another location in the drive train to the auxiliary dynamic machine. The sun wheel SS will then be permanently connected to the first pinion 33, and the overall length of the transmission will be reduced.

## Claims

1. A transmission comprising a normal input drive element (11), a supplementary drive element (33), an output member (12) and main planetary change-speed gearing (1, 2, 3) for driving the output member (12) from either input element (11, 33) independently of the other (33, 11) characterised by supplementary planetary gearing (S) interconnecting the supplementary drive element (33) and two elements ($R_1$, 12) of the main change speed gearing other than the normal input drive element (11), the proportioning of the supplementary planetary gearing being such that the means for engaging ($B_1$, $B_2$, $B_3$, $C_1$, $C_2$) the range of various drive ratios in the normal change speed gearing also provides a corresponding range of ratios between the supplementary drive element (33) and the output member 12.

2. A transmission according to claim 1, characterised in that one of the said two elements is the output member (12).

3. A transmission according to claim 2, characterised in that the other of the said two elements is the reaction member ($R_1$) for one of the gear ratios of the transmissions.

4. A transmission according to claim 3, characterised in that the other of the said two elements is the ring gear (R₁) of a primary epicyclic gear train (1) of the normal gearing, the planet carrier (L₁) of which is connected to the output member (12) and the sun wheel (S₁) of which is connected to the normal forward drive input member (13).

5. A transmission according to claim 3, characterised in that the main gearing is of the kind comprising first and second epicyclic gear sets (1, 2 Fig. 2) of which the sun wheels (S₁, S₂) are connected together and to releasable holding means (B₂), the ring gears are connected respectively to the forward drive input member and the output member (12) and the planet carriers of which are respectively connected to the output member (12) and to releasable holding means (B₁).

6. A transmission according to claim 5, characterised in that the supplementary gearing comprises an epicyclic gear train (3) having its ring gear connected to the planet carrier of the second train (2), its sun wheel connected to the supplementary drive member (33), its planet carrier connected to the ring gear of the second train (2) and its planet pinions meshing with both its sun wheel and its ring gear.

7. A transmission according to claim 5, characterised in that the supplementary gearing comprises an epicyclic gear train, having its ring gear (R₃) connected to the ring gear of the second train (2), its planet carrier connected to the planet carrier of the second train (2) and its sun wheel (S₃) connected to the supplementary drive member (33), the planet carrier of the supplementary train carrying inner planet pinions (PA) meshing with sun wheel (S₃) and outer planet pinions (PB) each meshing with an inner planet (PA) pinion and the ring gear (R₃).

## Patentansprüche

1. Getriebe mit einem normalen eingangsseitigen Antriebselement (11), einem zusätzlichen Antriebselement (33), einem Ausgangselement (12) und einem Hauptplanetenrad-Gangschaltgetriebe (1, 2, 3) zum Antrieb des Ausgangselementes (12) über jedes eingangsseitige Antriebselement (11, 33), unabhängig vom anderen (33, 11), gekennzeichnet durch ein zusätzliches Planetenradgetriebe (S), das das zusätzliche Antriebselement (33) und zwei Elemente (R₁, 12) des Hauptschaltgetriebes, die nicht aus dem normalen eingangsseitigen Antriebselement (11) bestehen, verbindet, und dass die Bemessung des zusätzlichen Planetenradgetriebes derart ist, dass die Vorrichtung (B₁, B₂, B₃, C₁, C₂) zum Erfassen des Bereiches der verschiedenen Antriebsverhältnisse im normalen Gangschaltgetriebe auch einen entsprechenden Bereich von Verhältnissen zwischen dem zusätzlichen Antriebselement (33) und dem Ausgangselement (12) liefert.

2. Getriebe nach Anspruch 1, dadurch gekennzeichnet, dass eines der erwähnten beiden Elemente das Ausgangselement (12) ist.

3. Getriebe nach Anspruch 2, dadurch gekennzeichnet, dass das andere der beiden Elemente das Reaktionselement (R₁) für eines der Übersetzungsverhältnisse des Getriebes ist.

4. Getriebe nach Anspruch 3, dadurch gekennzeichnet, dass das andere der beiden Elemente der Zahnkranz (R₁) einer primären epicyclischen Zahnradanordnung (1) des normalen Getriebes ist, dessen Planetenradträger (L₁) mit dem Ausgangselement (12), und dessen Sonnenrad (S₁) mit dem normalen Vorwärtsgang-Eingangselement (13) verbunden ist.

5. Getriebe nach Anspruch 3, dadurch gekennzeichnet, dass das Hauptgetriebe einer Bauart entspricht, die einen ersten und einen zweiten epicyclischen Zahnradsatz (1, 2; Fig. 2) aufweist, deren Sonnenräder (S₁, S₂) miteinander und mit einer lösbaren Haltevorrichtung (B₂) verbunden sind, deren Zahnkränze jeweils mit dem Vorwärtsgang-Eingangselement dem Ausgangselement (12) verbunden sind und deren Planetenträger jeweils mit dem Ausgangselement (12) und mit einer lösbaren Haltevorrichtung (B₁) verbunden sind.

6. Getriebe nach Anspruch 5, dadurch gekennzeichnet, dass das zusätzliche Getriebe eine epicyclische Zahnradanordnung (3) aufweist, deren Zahnkranz mit dem Planetenradträger des zweiten Zahnradsatzes (2) verbunden ist, dessen Sonnenrad mit dem zusätzlichen Antriebselement (33) verbunden ist, dessen Planetenradträger mit dem Zahnkranz der zweiten Zahnradanordnung (2) verbunden ist und dessen Planetenräder im Eingriff sowohl mit dessen Sonnenrad und dessen Zahnkranz stehen.

7. Getriebe nach Anspruch 5, dadurch gekennzeichnet, dass das zusätzliche Getriebe eine epicyclische Zahnradanordnung aufweist, deren Zahnkranz (R₃) mit dem Zahnkranz des zweiten Zahnradsatzes (2) verbunden ist, dessen Planetenradträger mit dem Planetenradträger der zweiten Zahnradsatzes (2) verbunden ist und dessen Sonnenrad (S₃) mit dem zusätzlichen Antriebselement (33) verbunden ist, und der Planetenradträger der zusätzlichen Zahnradanordnung innere Planetenräder (PA) trägt, die im Eingriff mit dem Sonnenrad (S₃) stehen sowie äussere Planetenräder (PB), von denen jedes im Eingriff mit einem inneren Planetenrad (PA) und dem Zahnkranz (R₃) steht.

## Revendications

1. Transmission comportant un élément moteur d'entrée usuel (11), un élément moteur supplémentaire (33), un organe de sortie (12) et un engrenage épicycloïdal principal (1, 2, 3) de changement de vitesse pour entraîner l'organe de sortie (12) à partir de l'un des éléments d'entrée (11, 33) indépendamment de l'autre (33, 11), caractérisée en ce qu'elle comporte un engrenage épicycloïdal supplémentaire (S) reliant entre eux l'élément moteur supplémentaire (33) et deux l'éléments (R₁, 12) de l'engrenage épicycloïdal principal de changement de vitesse autre que l'élément moteur d'entrée usuel (11), la conception de l'engrenage épicycloïdal supplémentaire étant telle que les moyens pour mettre en oeuvre $(B_1, B_2, B_3, C_1, C_2)$ la plage des différents rapports moteurs dans la boite de changement de vitesse usuelle produisent également une plage correspondante de rapports entre l'élément moteur supplémentaire (33) et l'organe de sortie (12).

2. Transmission selon la revendication 1, caractérisée en ce que l'un desdits deux éléments est l'organe de sortie (12).

3. Transmission selon la revendication 2, caractérisée en ce que l'autre desdits deux éléments est l'organe de réaction $(R_1)$ pour l'un des rapports d'engrenage de la transmission.

4. Transmission selon la revendication 3, caractérisée en ce que l'autre desdits deux éléments est la couronne d'un train épicycloïdal primaire (1) de la boite usuelle, dont le porte-satellite $(L_1)$ est relié à l'organe de sortie (12) et dont le planétaire $(S_1)$ est relié à l'organe d'entrée moteur usuel (13) situé en avant.

5. Transmission selon la revendication 3, caractérisée en ce que l'engrenage principal est du type comportant des premier et second jeux d'engrenages épicycloïdaux (1, 2, Figure 2) dont les planétaires $(S_1, S_2)$ sont reliés ensemble et à des moyens de support $(B_2)$ libérables, les couronnes étant reliées respectivement à l'organe d'entrée moteur situé en avant et à l'organe de sortie (12) et dont les porte-satellites sont respectivement reliés à l'organe de sortie (12) et aux moyens de support libérables $(B_1)$.

6. Transmission selon la revendication 5, caractérisée en ce que l'engrenage supplémentaire comporte un train épicycloïdal (3) ayant sa couronne reliée au porte-satellite du second train (2), son planétaire étant relié à l'organe moteur supplémentaire (33), son porte-satellite étant relié à la couronne du second train (2) et ses satellites engrenant à la fois avec son planétaire et sa couronne.

7. Transmission selon la revendication 5, caractérisée en ce que l'engrenage supplémentaire comporte un train épicycloïdal, ayant sa couronne $(R_3)$ reliée à la couronne du second train (2), son porte-satellite étant relié au porte-satellite du second train (2) et son planétaire $(S_3)$ étant relié à l'organe moteur supplémentaire (33), le porte-satellite du train supplémentaire portant des pignons satellites intérieurs (PA) engrenant avec le pignon planétaire $(S_3)$ et des pignons satellites extérieurs (PB) chacun engrenant avec un satellite intérieur (PA) et la couronne $(R_3)$.

$FIG.1a$

FIG.1b

FIG.2

| TRAIN NO. | 1 | 2 | 3 |
|-----------|-----|-----|------|
| SUN/RING | 0.5 | 0.5 | 0.66 |

FIG.3

| TRAIN NO. | 1 | 2 | 3 |
|-----------|-----|-----|-----|
| SUN/RING | 0.5 | 0.5 | 0.4 |

FIG.4

| TRAIN NO. | 1 | 2 | 3 | 4 |
|-----------|-----|-----|------|------|
| SUN/RING | 0.5 | 0.5 | 0.33 | 0.33 |

FIG.5

| TRAIN NO. | 1 | 2 | 3 | 4 | 5 |
|---|---|---|---|---|---|
| SUN/RING | 0.33 | 0.5 | 0.33 | 0.5 | 0.5 |

FIG.6

| TRAIN NO. | 1 | 2 | 3 | 4 | 5 | 6 |
|---|---|---|---|---|---|---|
| SUN/RING | 0.28 | .52 | .36 | .605 | .605 | .605 |

FIG.7

| TRAIN NO. | 1 | R | $S_1$ | $S_2$ |
|---|---|---|---|---|
| SUN/RING | 0.47 | 0.47 | 0.5 | 0.5 |

4